# EUROPÄISCHE PATENTSCHRIFT

(11) **EP 0 451 551 B1**
(45) Veröffentlichungstag und Bekanntmachung des Hinweises auf die Patenterteilung: **03.08.1994**
(21) Anmeldenummer: 91104203.4
(22) Anmeldetag: 19.03.1991
(51) Int. Cl.: B60L 11/18, H02K 21/24, H02K 21/32

(54) **Elektrisches Antriebssystem für ein Fahrzeug**
Electrical driving device for a vehicle
Système d'entraînement électrique pour véhicule

(30) Priorität: 10.04.1990 DE 4012062
(43) Veröffentlichungstag der Anmeldung: 16.10.1991
(73) Patentinhaber: Schlüter, Gerd, D-24146 Kiel (DE); Knippschild, Gerd, D-24109 Kiel (DE); Lipski, Hans-Jürgen, D-22761 Hamburg (DE); Schlomka, Norman, D-24113 Kiel (DE)
(72) Erfinder: Schlüter, Gerd, D-24146 Kiel (DE); Knippschild, Gerd, D-24109 Kiel (DE); Lipski, Hans-Jürgen, D-22761 Hamburg (DE); Schlomka, Norman, D-24113 Kiel (DE)
(74) Vertreter: Meyer, Ludgerus A., Dipl.-Ing.

(56) Entgegenhaltungen:
- EP-A- 0 046 997
- DE-A- 2 645 507
- DE-A- 3 410 293
- US-A- 4 223 255
- US-A- 4 491 768
- US-A- 4 556 828
- PATENT ABSTRACTS OF JAPAN vol. 11, no. 359 (E-559)(2806) 21 November 1987 ; & JP-A-62 135 251

## Beschreibung

Die Erfindung betrifft ein elektrisches Antriebssystem für ein Fahrzeug nach dem Oberbegriff der Ansprüche 1 oder 2.

Übliche Fahrzeuge des heutigen Straßenverkehrs werden durch Verbrennungsmotoren angetrieben. Vereinzelt sind auch elektrisch angetriebene Fahrzeuge bekannt, die durch eine Batterie oder auch durch eine Solarenergieanlage mit Energie versorgt werden. Für Transportkarren auf Bahnhöfen, Gabelstapler und dergleichen ist es auch seit langem üblich, batteriegespeiste, elektrische Antriebe zu verwenden.

Wesentliche Nachteile elektrisch angetriebener Fahrzeuge liegen darin begründet, daß die Nachladung der benötigten Batterien eine erhebliche Zeit beansprucht oder einen aufwendigen Austausch erfordert, wobei die Kapazität der Batterien aus Gewichtsgründen erheblich eingeschränkt ist, sowie darin, daß notwendige Steuerungseinrichtungen zusätzliche Verluste verursachen. Batterien, Antriebsmotoren und Steuereinrichtungen weisen außerdem ein erhebliches Gewicht auf, das die Energiebilanz zusätzlich verschlechtert.

Aus der EP 46 997 ist ein elektrischer Drehstrom-Antrieb für Kraftfahrzeuge mit einem Axialfeldmotor bekannt, bei dem der Läufer die Radtrommel und Bremsscheibe und der Ständer die Bremsklötze und Spritzschutzplatten an wenigstens zwei Rädern eines Räderpaares eines üblichen Kraftfahrzeuges ersetzt. Der Axialfeldmotor enthält Ringwicklungen, die insbesondere aus geschuppt angeordneten Lamellenwindungen aufgebaut sind. Es ist auch eine Gestaltung als Scheibenmotor angegeben, jedoch wird dies als verschlechterte Ausführungsform angesehen. Zur Steuerung des Motors ist ein Drehstromumformer vorgesehen.

Die DE 26 45 507 Al offenbart einen Leistungswandler für aus einer Batterie gespeiste Elektrofahrzeuge. Dabei wird die Batteriegleichspannung zunächst in eine Wechselspannung umgewandelt und dann mittels eines Übersetzungstransformators in eine höhere Spannung umgesetzt, die dann gleichgerichtet wird und an die Antriebsmotoren abgegeben wird. Zur Erzeugung einer Wechselspannung veränderbarer Frequenz kann dort ein weiterer Wandler vorgesehen sein. Um die Spannung einzustellen, kann der angegebene erste Wandler eine Impulsweitensteuerung erfahren.

Der Erfindung liegt die Aufgabe zugrunde, ein elektrisches Antriebssystem für ein Fahrzeug anzugeben, bei dem die erforderlichen Massen der Antriebsmotore erheblich reduziert sind, das einen hohen Wirkungsgrad aufweist und einfach aufgebaut ist.

Diese Aufgabe wird durch die in den Ansprüchen 1 oder 2 angegebene Erfindung gelöst. Vorteilhafte Weiterbildungen der Erfindung sind in Unteransprüchen angegeben.

Durch die erfindungsgemäße Ausbildung der Antriebsmotoren können diese in ihrem Gewicht erheblich reduziert werden. Außerdem ist der Platzbedarf verringert, so daß jedem einzelnen Antriebsrad ein Motor zugeordnet sein kann, und auf mechanische Antriebsübertragungsglieder von den Motoren zu den einzelnen Rädern weitgehend verzichtet werden kann. Durch eine elektrischelektronische Steuerungseinrichtung kann, insbesondere bei Kurvenfahrten, ein Drehmomentausgleich der Antriebsräder erfolgen.

Die Erfindung wird nachstehend anhand von Ausführungsbeispielen näher beschrieben. Es zeigen:
Fig. 1 ein Blockschaltbild einer Pulssteuerung,
Fig. 2 eine Schaltung gemäß Fig. 1,
Fig. 3 eine Pulsdarstellung,
Fig. 4 eine Darstellung einer Schaltung zur Motorsteuerung,
Fig. 5 einen Wicklungsaufbau einer 24-poligen Maschine.

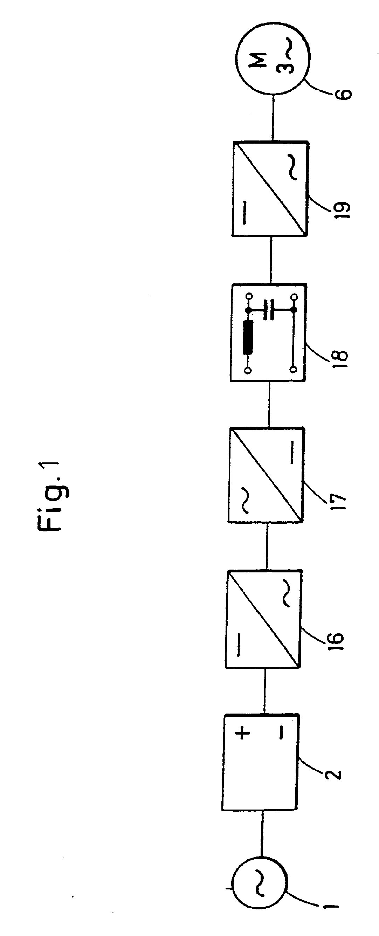

Das in Fig. 1 dargestellte Prinzipschaltbild zeigt einen Generator 1, der zur Aufladung einer Batterie 2 vorgesehen ist. Der Generator 1 ist vorzugsweise außerhalb des Fahrzeuges angeordnet und wird bei Bedarf verwendet, um die Batterie wieder zu laden. Der Generator 1 kann jedoch auch innerhalb des Fahrzeuges, beispielsweise als Verbrennungskraftmaschine mit nachgeschaltetem Generator ausgebildet sein, der eine ständige Aufladung der Batterie bewirkt.

Es ist vorzugsweise vorgesehen, daß jedem Rad des Automobils ein Drehstrom-Scheibenläufermotor zugeordnet ist. Dadurch kann eine mechanische Kopplung der Räder, beispielsweise durch ein Synchrongetriebe, entfallen.

Ein Drehstrom-Scheibenläufer besteht beispielsweise aus ein oder mehreren Kunststoffscheiben, die beidseitig mit Leiterbahnen in einer bestimmten Leiterbahnenanordnung belegt sind. Die Scheiben sind unmittelbar auf der Radwelle befestigt. Beidseitig der Scheibe bzw. den Scheiben sind Magnete in abwechselnder Polarität angeordnet. Diese weisen um den Außenumfang der Scheiben laufende Eisenrückschlüsse auf.

Aus der älteren Anmeldung DE-A-39 18 166 ist die Ausführungs- form eines derartigen Drehstrom-Scheibenläufers grundsätzlich entnehmbar, wobei es sich im dortigen Fall um einen Generator handelt.

Zur Stromzuführung weist der Motor 6 Schleifkontakte auf, die sich vorzugsweise radial innen an der Motorwelle befinden. Sofern eine kontaktlose Stromzuführung gewünscht wird, ist es erforderlich, die Magnete auf der Motorwelle anzubringen, während die die Wicklungen tragenden Scheiben stationär angeordnet sind. Da durch die Gewichtskräfte der Magnete erhebliche Fliehkräfte zu beherrschen sind, werden vorzugsweise Magnete aus Seltenen Erden verwendet.

Die Batteriespannung wird einem Wechselrichter 16 zugeführt, der einen Drehstrom von beispielsweise 380 Volt erzeugt. Der Wechselrichter kann ein gesteuerter oder ungesteuerter Wechselrichter sein. Die im Umformer 17 erzeugte Gleichspannung wird durch das Glättungsglied 18 geglättet. Hieran schließt sich ein Wechselrichter 19 an, der in seiner Frequenz einstellbar ist und einen Drehstrom erzeugt, der den Motor 6 zugeführt werden kann. Der Wechselrichter 19 ist vorzugsweise als Pulsbreiten- oder Pulsfolgesteuerung oder einer Kombination ausgestaltet. Die Pulsbreitensteuerung erlaubt eine Amplitudeneinstellung des erzeugten Wechselstroms, während die Pulsfolgesteuerung gleichzeitig eine Frequenz- und Amplitudensteuerung ermöglicht.

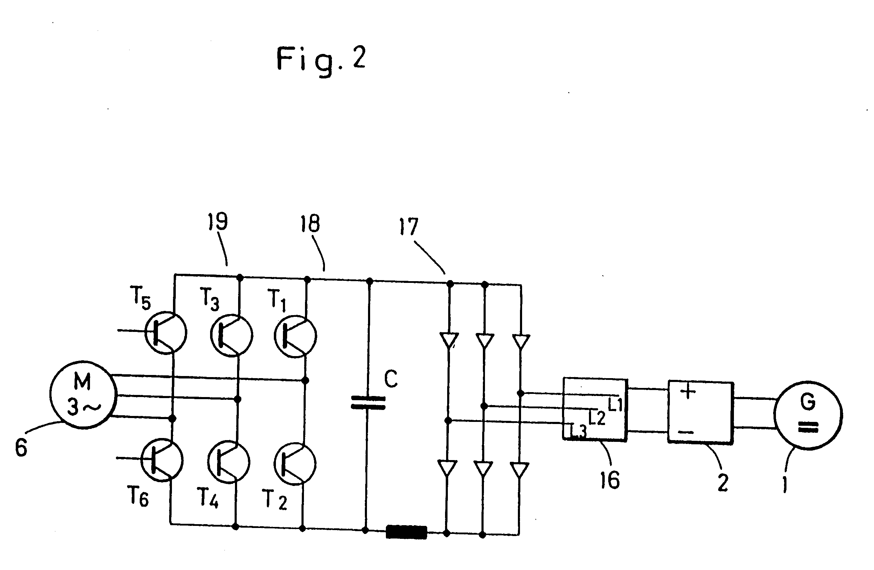

Fig. 2 zeigt einen Ausschnitt aus einer Schaltung gemäß Fig. 1. Dieses stark vereinfachte Schaltbild zeigt den Wechselrichter 16, der einen Drehstrom erzeugt, der im Gleichrichter 17 in eine Gleichspannung umgewandelt wird. An das Glättungsteil 18, bestehend aus Kondensatoren und Spulen, schließt sich der Wechselrichter 19 an. Dieser ist vorzugsweise aus Transistoren oder Thyristoren gebildet, die durch eine Steuerschaltung in der Weise geschaltet sind, daß jeweils positive und negative Pulspakete erzeugt werden können, die auf drei Phasen aufgeteilt sind, so daß sich ein Drehstrom ergibt, der dem Motor 6 zugeführt werden kann.

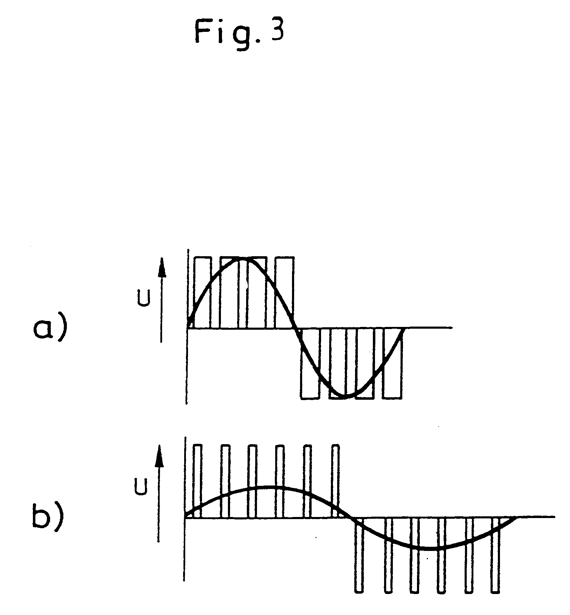

Fig.3 zeigt beispielhaft die Erzeugung einer Wechselspannung durch eine Schaltung nach Fig. 2. Fig. 3a zeigt eine hohe Spannung bei großer Pulsbreite, während Fig. 3b eine geringe Spannung zeigt, deren Amplitude durch eine schmale Pulsbreite bestimmt ist. Die Frequenz der erzeugten Wechselspannung hängt von der Zahl und dem Abstand der Pulse während einer Halbwelle ab.

Soll beispielsweise eine Pulsfolge gemäß Fig. 3a erzeugt werden, so müssen die Transistoren T₂ und T₃ (Fig. 2) jeweils zusammen viermal in den leitenden und dann viermal in den sperrenden Zustand gesteuert werden. Danach verbleiben die Transistoren T₂ und T₃ im gesperrten Zustand und die Transistoren T₄ und T₁ werden zusammen viermal erst in den leitenden Zustand und dann in den gesperrten Zustand gesteuert. Für die Speisung der anderen Anschlüsse werden die Transistoren entsprechend um 120° versetzt angesteuert.

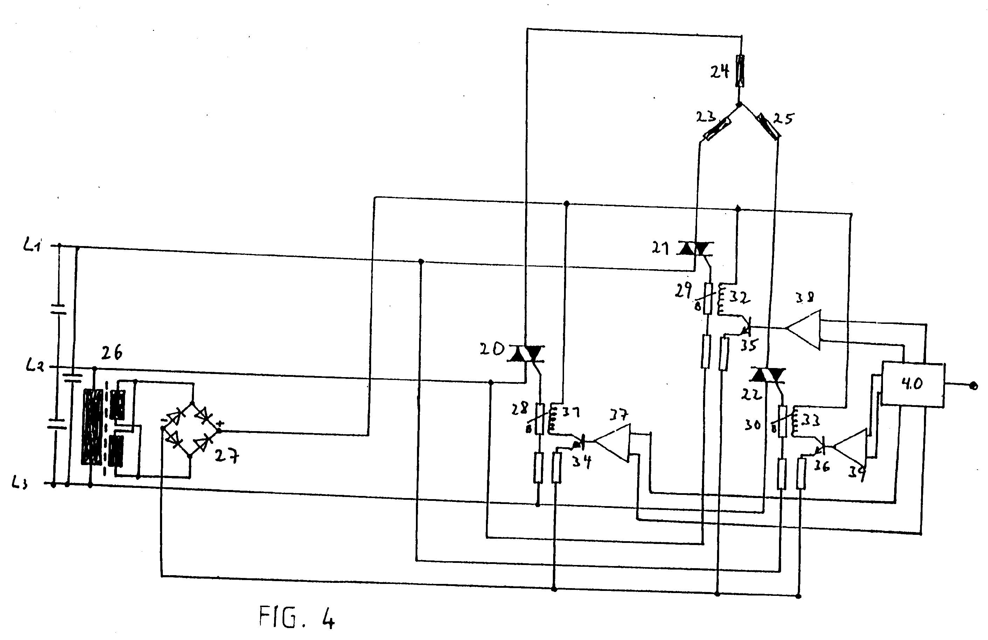

Fig. 4 zeigt eine weitere Möglichkeit der Steuerung eines Drehstromscheibenläufermotors.

Die Drehstromanschlüsse L₁, L₂, und L₃ sind über Thyristoren 20,21,22 an die Wicklungen 23, 24, 25 der sternförmig geschalteten Motore angeschlossen. Über einen Transformator 26 und einen Gleichrichter 27 wird eine Gleichspannung erzeugt. Zwischen den Zündelektroden der Thyristoren und einer anderen Phase sind magnetisch steuerbare Widerstände 28, 29, 30 jeweils mit Vorwiderstand geschaltet. Die Steuerung der magnetisch steuerbaren Widerstände erfolgt über zugeordnete Spulen 31, 32, 33, die im Kollektorkreis von Transistoren 34, 35, 36 liegen. Die Transistoren werden über Operationsverstärker 37, 38, 39 angesteuert.

An die Operationsverstärker sind an sich bekannte integrierte Impulsgeber angeschlossen, die u.a. in der Frequenz bei konstantem Taktverhältnis steuerbar sind.

Durch Einstellung der Frequenz und/oder des Taktverhältnisses der Impulsgeber kann daher ein weiter Steuerbereich zur Speisung der Scheibenläufermotoren erfaßt werden. Dies erlaubt auch die Einstellung des Drehmomentes in Abhängigkeit vom Lenkeinschlag des Fahrzeuges.

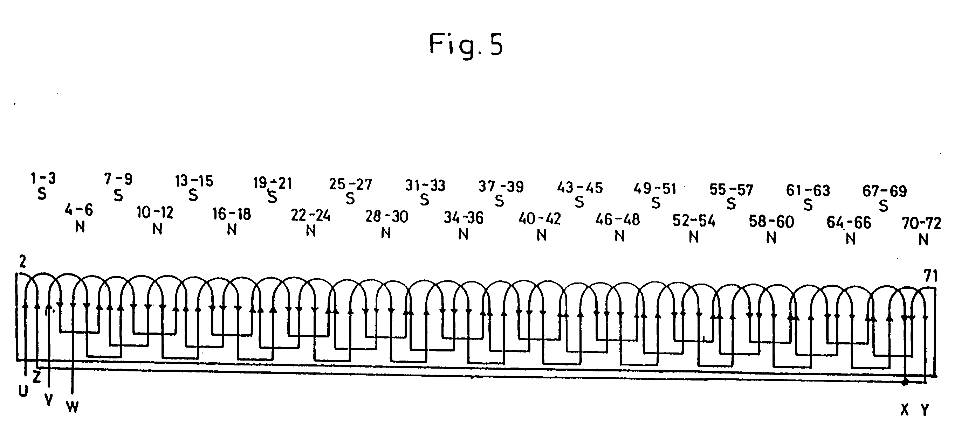

Fig. 5 zeigt das Wicklungsbild einer 24-poligen Maschine mit den Anschlüssen U, V, W und X, Y, Z. Die Polbedeckung kann auch in anderer Weise, insbesondere 12-polig, ausgebildet sein. Oberhalb der Darstellung von Fig. 5 sind jeweils die Anschlußverbindungen und die abwechselnde Polfolge der Magnete dargestellt.

Durch eine Umschalteinrichtung kann vorgesehen sein, daß im Bremsbetrieb des Fahrzeuges die Motoren als Generatoren wirken und die auf diese Weise erzeugte Energie an die Batterie zurückgeben. Der oder die Motoren können auch in Reihe oder Parallel geschaltet sein. Frequenz und Amplitude des den einzelnen Motoren an den Rädern zugeführten Drehstroms werden einzeln gesteuert, um eine dem Bedarf, insbesondere bei Kurvenfahrten, anzupassende Steuerung der Motoren zu ermöglichen.

## Patentansprüche

1. Elektrisches Antriebssystem für ein Fahrzeug, insbesondere Automobil mit wenigstens zwei jeweils einem Rad des Fahrzeuges zugeordneten Drehstrom-Scheibenläufermotoren (6), mit einer Batterie (2) und einem Drehstromumformer, dadurch gekennzeichnet, daß der jeweilige, in Amplitude und Frequenz steuerbare 12- oder 24-polig ausgebildete Drehstrom-Scheibenläufermotor (6) eine auf der Motorwelle angeordnete Leiterbahnen aufweisende Drehscheibe aufweist, daß beiderseitig der Drehscheibe auf einem Kreisumfang angeordnete Magnete mit abwechselnder Polarität mit außerhalb des Scheibenaußenumfangs angeordnetem Eisenrückschluß vorgesehen sind. daß die Motorstromzuführung über Schleifkontakte erfolgt, die radial eng an der Motorwelle angeordnet sind. daß die Gleichspannung der Batterie einem Wechselrichter (16) zur Erzeugung eines in der Amplitude höheren Drehstroms und nachgeschaltetem Gleichrichter (17) mit Glättungsschaltung (18) zugeführt ist, daß die derart erzeugte Gleichspannung einer in der Folge und der Breite einstellbaren Pulsbreitensteuerung (19) zugeführt ist, deren Ausgangsspannung an die Drehstromwicklung des jeweiligen Scheibenläufermotors (6) angelegt ist, und daß an zwei gegenüberliegenden Rädern des Fahrzeuges je ein Drehstrom-Scheibenläufermotor (6) vorgesehen ist, wobei die Steuerung des Drehmoments und/oder der Frequenz der einzelnen Motoren vom durch den Fahrer des Fahrzeuges vorgenommenen Lenkeinschlag beeinflußt ist..

2. Elektrisches Antriebssystem für ein Fahrzeug, insbesondere Automobil mit wenigstens zwei jeweils einem Rad des Fahrzeuges zugeordneten Drehstrom-Scheibenläufermotoren (6), mit einer Batterie (2) und einem Drehstromumformer, dadurch gekennzeichnet, daß der jeweilige in Amplitude und Frequenz steuerbare 12- oder 24-polig ausgebildete Drehstrom-Scheibenläufermotor (6) eine stehende Leiterbahnen aufweisende ringförmige Scheibe aufweist, daß beiderseits der Scheibe auf einem Kreisumfang auf der Motorwelle angeordnete Magnete mit abwechselnder Polarität mit auf der Motorwelle angeordnetem Eisenrückschluß vorgesehen sind, daß die Gleichspannung der Batterie einem Wechselrichter (16) zur Erzeugung eines in der Amplitude höheren Drehstroms und nachgeschaltetem Gleichrichter (17) mit Glättungsschaltung (18) zugeführt ist, daß die derart erzeugte Gleichspannung einer in der Folge und der Breite einstellbaren Pulsbreitensteuerung (19) zugeführt ist, deren Ausgangsspannung an die Drehstromwicklung des jeweiligen Scheibenläufermotors (6) angelegt ist, und daß an zwei gegenüberliegenden Rädern des Fahrzeuges je ein Drehstrom- Scheibenläufermotor (6) vorgesehen ist, wobei die Steuerung des Drehmomentes und/oder der Frequenz der einzelnen Motoren vom durch den Fahrer des Fahrzeuges vorgenommenen Lenkeinschlag beeinflußt ist.

3. System nach Anspruch 1 oder 2, dadurch gekennzeichnet, daß die Pulsbreitensteuerung in den den Motoren zugeführten Drehstrompfaden eingeschaltete Thyristoren (20 - 22) enthalten, die unter galvanischer Trennung über magnetisch steuerbare Widerstände (28 - 30) zündbar sind, wobei die Steuerung der Thyristoren aus Impulsgebem abgeleitet wird, die in Frequenz und/oder Taktverhältnis einstellbar sind.

4. System nach Anspruch 1 oder 2, dadurch gekennzeichnet, daß die Magnete aus Seltenen Erden bestehen.

## Claims

1. Electric driving system for a vehicle, especially a car with at least two three-phase disk rotor motors (6), each one assigned to a wheel of the vehicle, with a battery (2) and a three-phase converter, characterized in that the 12- or 24-pole three-phase disk rotor motor (6), the amplitude and frequency of which are controllable in each case, has a rotating disk arranged on the motor shaft and having conductor lines, in that magnets arranged on a circumference on both sides of the rotating disk are provided with alternating polarity with iron short circuit arranged outside the outer periphery of the disk, in that the motor current is supplied via sliding contacts which are arranged radially close against the motor shaft, in that the direct voltage of the battery is fed to an inverter (16) to produce a three-phase current which has a higher amplitude, and to a load-side rectifier with smoothing circuit (18), in that the direct voltage produced in such a way is fed to a pulse-width control (19), the sequence and width of which are adjustable, and the output voltage of which is applied to the three-phase winding of the disk rotor motors in question (6), and in that a three-phase disk rotor motor (6) is provided on each of two opposite wheels of the vehicle, whereby control of the torque and/or of the frequency of the individual motors is influenced by the steering movement carried out by the driver of the vehicle.

2. Electric driving system for a vehicle, especially a car with at least two three-phase disk rotor motors (6), each one assigned to a wheel of the vehicle, with a battery (2) and a three-phase converter, characterized in that the 12- or 24-pole three-phase disk rotor motor (6), the amplitude and frequency of which are controllable, has an annular disk having standing conductor lines, in that magnets arranged on both sides of the disk on a periphery on the motor shaft are provided with alternating polarity with iron short circuit arranged on the motor shaft, in that the direct voltage of the battery is fed to an inverter (16) to produce a three-phase current which has a higher amplitude, and to a load-side rectifier with smoothing circuit (18), in that the direct voltage produced in such a way is fed to a pulse-width control (19), the sequence and width of which are adjustable, and the output voltage of which is applied to the three-phase winding of the disk rotor motors in question (6), and in that a three-phase disk rotor motor (6) is provided on each of two opposite wheels of the vehicle, whereby control of the torque and/or of the frequency of the individual motors is influenced by the steering movement carried out by the driver of the vehicle.

3. System according to claim 1 or 2, characterized in that the pulse-width control is contained in the thyristors (20-22) connected in the three-phase current paths fed to the motors, which thyristors can be ignited under galvanic separation via magnetically controllable resistors (28-30), control of the thyristors being derived from pulse generators whose frequency and/or timing behaviour can be adjusted.

4. System according to claim 1 or 2, characterized in that the magnets consist of rare earths.

## Revendications

1. Système d'entraînement électrique pour un véhicule, notamment une automobile, comportant au moins deux moteurs triphasés à rotors à disques (6) associés chacun à une roue du véhicule, une batterie (2) et un convertisseur triphasé, caractérisé en ce que le moteur triphasé à rotors à disques (6) à 12 ou 24 pôles apte à être commandé en amplitude et en fréquence comporte un disque tournant disposé sur l'arbre de moteur et pourvu de pistes conductrices, en ce qu'il est prévu, de part et d'autre du disque tournant, des aimants de polarités alternées disposés sur un pourtour circulaire, avec un retour magnétique disposé à l'extérieur du pourtour extérieur des disques, en ce que l'alimentation de courant du moteur se fait par l'intermédiaire de contacts à frottement qui sont disposés tout près de l'arbre de moteur, radialement, en ce que la tension continue de la batterie est transmise à un onduleur (16) en vue de générer un courant triphasé de plus grande amplitude, et à un redresseur (17) monté en aval et comportant un circuit de filtrage (18), en ce que la tension continue ainsi générée est transmise à une commande de durée d'impulsion (19) dont le train et la durée d'impulsion sont réglables et dont la tension de sortie est appliquée à l'enroulement du moteur triphasé à rotors à disques (6) correspondant, et en ce qu'il est prévu, au niveau de deux roues opposées du véhicule, des moteurs triphasés à rotors à disques (6) respectifs, la commande du couple de rotation et/ou de la fréquence des différents moteurs étant influencée par le braquage opéré par le conducteur du véhicule.

2. Système d'entraînement électrique pour un véhicule, notamment une automobile, comportant au moins deux moteurs triphasés à rotors à disques (6) associés chacun à une roue du véhicule, une batterie (2) et un convertisseur triphasé, caractérisé en ce que le moteur triphasé à rotors à disques (6) à 12 ou 24 pôles apte à être commandé en amplitude et en fréquence comporte un disque annulaire fixe pourvu de pistes conductrices, en ce qu'il est prévu, de part et d'autre du disque, des aimants de polarités alternées disposés sur l'arbre de moteur, sur un pourtour circulaire, avec un retour magnétique disposé sur l'arbre de moteur, en ce que la tension continue de la batterie est transmise à un onduleur (16) en vue de générer un courant triphasé de plus grande amplitude, et à un redresseur (17) monté en aval et comportant un circuit de filtrage (18), en ce que la tension continue ainsi générée est transmise à une commande de durée d'impulsion (19) dont le train et la durée d'impulsion sont réglables et dont la tension de sortie est appliquée à l'enroulement du moteur triphasé à rotors à disques (6) correspondant, et en ce qu'il est prévu, au niveau de deux roues opposées du véhicule, des moteurs triphasés à rotors à disques (6) respectifs, la commande du couple de rotation et/ou de la fréquence des différents moteurs étant influencée par le braquage opéré par le conducteur du véhicule.

3. Système selon la revendication 1 ou 2, caractérisé en ce que la commande de durée d'impulsion prévue dans les voies triphasées transmises aux moteurs contient des thyristors intégrés (20-22) qui sont aptes à être amorcés par l'intermédiaire de résistances (28-30) aptes à être commandées par voie magnétique, moyennant une séparation galvanique, la commande des thyristors étant dérivée de générateurs d'impulsions qui sont réglables en fréquence et/ou en rapport de cycle.

4. Système selon la revendication 1 ou 2, caractérisé en ce que les aimants se composent de terres rares.
